# EUROPEAN PATENT SPECIFICATION

(11) **EP 3 163 213 B1**
(45) Date of publication and mention of the grant of the patent: **29.07.2020**
(21) Application number: 15192560.9
(22) Date of filing: 02.11.2015
(51) Int. Cl.: F24S 10/40

(54) **METHOD FOR MANUFACTURING A HEAT RECEIVER TUBE, SOLAR COLLECTOR WITH THE HEAT RECEIVER TUBE AND METHOD FOR PRODUCING ELECTRICITY BY USING THE SOLAR COLLECTOR**
VERFAHREN ZUR HERSTELLUNG EINES WÄRMEEMPFÄNGERROHRS, SONNENKOLLEKTOR MIT DEM WÄRMEEMPFÄNGERROHR UND VERFAHREN ZUR ERZEUGUNG VON STROM MIT DEM SONNENKOLLEKTOR
PROCÉDÉ DE FABRICATION D'UN TUBE RÉCEPTEUR DE CHALEUR, CAPTEUR SOLAIRE DOTÉ D'UN TEL TUBE ET PROCÉDÉ POUR PRODUIRE DE L'ÉLECTRICITÉ EN UTILISANT LE COLLECTEUR SOLAIRE

(43) Date of publication of application: 03.05.2017
(73) Proprietor: Siemens Concentrated Solar Power Ltd., 48091 Rosh Ha ayin (IL)
(72) Inventor: Klapwald, Shmulik, 9574627 Jerusalem (IL)
(74) Representative: Maier, Daniel Oliver

(56) References cited:
- WO-A1-2015/151774
- DE-A1- 19 821 137
- GB-A- 2 032 095
- US-A- 4 183 351
- US-A1- 2013 228 166

## Description

### BACKGROUND OF THE INVENTION

### 1. Field of the invention

This invention relates to a method for manufacturing a heat receiver tube, a solar collector with the heat receiver tube and a method for producing electricity by using of the solar collector.

### 2. Description of the related art

A sun energy collecting unit (solar collector) of a sun field power plant based on the concentrated solar power technique is for instance a solar collector with a parabolic mirror and a heat receiver tube. The heat receiver tube is arranged in a focal line of a solar radiation (sunlight) reflecting surface of the mirror. By the solar radiation reflecting surface sunlight is collected and focused to the heat receiver tube.

The heat receiver tube comprises a core tube (inner tube, e.g. made of stainless steel) which is filled with a heat transfer fluid, e.g. a thermo-oil or molten salt. With the aid of a solar radiation absorptive coating of the core tube the heat receiver tube absorbs energy from the sun. Energy from the sun is efficiently coupled into the heat transfer fluid. Solar energy is converted into thermal energy.

In order to minimize a loss of thermal energy, the heat receiver tube comprises an encapsulation with an enveloping tube. The enveloping tube envelops the core tube.

For instance, the enveloping tube is a glass tube. This enveloping tube is at least partly transparent for solar radiation. So, solar radiation can impinge the solar radiation absorptive coating of the core tube.

The core tube and the enveloping tube are coaxially arranged to each other resulting in an inner space of the heat receiver tube which is bordered by a core tube surface of the core tube and by an inner enveloping tube surface of an enveloping tube wall of the enveloping tube.

The inner space of the heat receiver tube between the inner tube and the enveloping tube is evacuated in order to minimize convection and hence in order to minimize a thermal loss of the heat receiver tube. The inner heat receiver tube space is a vacuum chamber.

Such heat receiver tubes are known from WO 2015/151774 A1, US 2013/228166 A1, US 4 183 351 A, GB 2 032 095 A and DE 198 21 137 A1.

One problem is a degradation of the heat transfer fluid during operation for years. By the degradation Hydrogen (H₂) results. This Hydrogen permeates through the stainless steel wall of the core tube into the evacuated inner space of the heat transfer tube. The result is a collapse of the vacuum of the inner space of the heat receiver tube and hence an increase of the thermal loss of the heat receiver tube.

A solution of this problem is described in US 2013/228166 A1: A container with noble gas is place in the inner tube space. For the case of a collapse of the vacuum the container is opened up and the inner space is filled with Xenon. The filling of the inner tube space with inert gas can be derived from DE 198 21 137 A1. In this case a cap with an opening is used through which the filling can be conducted.

### SUMMARY OF THE INVENTION

It is an object of the invention to ensure low thermal loss during the operation of a heat receiver tube.

Objects of the invention are the providing of a method for manufacturing a heat receiver tube, a solar collector with the heat receiver tube and a method for producing electricity by using the solar collector.

These objects are achieved by the invention specified in the claims.

With the invention a method for manufacturing a heat receiver tube for absorbing solar energy and for transferring absorbed solar energy to a heat transfer fluid which can be located inside of at least one core tube of the heat receiver tube is provided. The core tube comprises a core tube surface with at least one solar energy absorptive coating for absorbing solar radiation. The core tube is enveloped by at least one enveloping tube. The enveloping tube comprises at least one enveloping tube wall which is at least partly transparent for the solar radiation. The enveloping tube wall comprises at least one inner enveloping tube surface. The core tube and the enveloping tube are coaxially arranged to each other such that an inner heat receiver tube space is formed which is bordered by the core tube surface and the inner enveloping tube surface. The heat receiver tube comprises at least one inlet port for pouring in of at least one inert gas into the inner heat receiver tube space. The method comprises following steps: a) Providing of at least one precursor tube of the heat receiver tube; b) Arranging of the inlet port at the precursor tube of the heat receiver tube; and c) Pouring in of the inert gas into the inner heat receiver tube space through the inlet port. A partial pressure of the inert gas in the inner heat receiver tube space is selected from the range between 5 mbar and 300 mbar. The method is characterized in that the arranging of the inlet port comprises a drilling of a hole into the enveloping tube wall and the drilling comprises a laser drilling.

In a preferred embodiment, an inlet port is used which comprises an inlet port dimension which is selected from the range between 1 mm and 20 mm and preferably selected from the range between 2 mm and 10 mm.

For instance, the inner core tube comprises a core tube wall which is made of stainless steel. The enveloping tube which is transparent for the sunlight (transmission for specific wavelengths more the 90%) is arranged coaxially around the inner core tube of the heat receiver tube. The enveloping tube is preferably made of glass. The enveloping tube wall comprises glass. But other transparent materials are possible, too.

The core tube surface and the inner enveloping tube surface are preferably oppositely arranged to each other. The result is a vacuum chamber.

In a preferred embodiment, the heat receiver tube comprises least one dimension adapting device with a flexible adapting device wall for compensation of a thermally induced change of at least one dimension of the heat receiver tube. Preferably, a heat receiver tube with a dimension adapting device is used which comprises a bellows and wherein the flexible adapting device wall comprises a bellows wall. The bellows is preferably arranged at a front side of the heat receiver tube.

In a preferred embodiment, the enveloping tube and the dimension adapting device are covered by at least one heat receiver tube skirt with at least one heat receiver tube skirt wall.

In a preferred embodiment, a flexible adapting device wall (and/or the heat receiver tube skirt wall) which comprises at least one metal. Preferably, these walls are made of metal, for instance stainless steel. Metal has the advantage that it is resistant to high temperatures. In addition, metal is quite flexible (in comparison to other materials like ceramics)

The inlet port or a plurality of inlet ports can be arranged at different locations of the heat receiver tube. In a preferred embodiment, the enveloping tube wall and/or the bellows wall (and/or the heat receiver tube skirt wall) comprise the inlet port.

Moreover, a solar collector is provided which comprises at least one mirror having a solar radiation reflecting mirror surface for directing the solar radiation to a focal line of the solar radiation reflecting mirror surface and at least one heat receiver tube which is arranged in the focal line of the solar radiation reflecting mirror surface. Preferably, the mirror is a parabolic mirror or a Fresnel mirror. The mirror is a parabolic mirror with a parabolic shaped solar radiation reflecting mirror surface. Alternatively, the mirror is a Fresnel mirror. Thereby it is not necessary, that the heat receiver tube is exactly located in the focal line of the mirror. Aberrations from an exact arrangement in the focal line are possible, too.

In addition, a method for producing electricity by using the solar collector in a solar thermal power plant for converting solar radiation into electrical energy, wherein an absorbing of the solar radiation is carried out with the aid of the solar collector.

After the arranging of the inlet port at the receiver tube the pouring of the inert gas into the heat receiver tube space though the inlet port is carried out. The result is a heat receiver tube wherein the inner tube space comprises the inert gas. Thereby the inert gas is at least one noble gas which selected from the group consisting of Krypton and Xenon. Other gases or mixtures of different gasses are possible, too.

In a preferred embodiment, a partial pressure of the inert gas in the inner heat receiver tube space is selected from the between 100 mbar and 200 mbar. For instance, the inner space of the heat receiver tube is filled with Xe with a partial pressure of about 150 mbar.

In order to keep the inert gas in the inner space it is necessary to seal the inlet port after the filling (pouring in). So, in a preferred embodiment, after the pouring of the inert gas though the inlet port a sealing of the inlet port is carried out. With the aid of the sealing the loss of inert gas is avoided. Inert gas doesn't leave to the environment of the heat receiver tube. The sealing is advantageous for an inlet port which is arranged in the enveloping tube made of glass. Preferably, the sealing is carried out with the aid of a sealing. For instance, the sealing comprises a sealing ring. The sealing ring is preferably made of elastomeric sealing material.

Finally, a use of the solar collector in a solar thermal power plant for converting solar energy into electrical energy is disclosed. Thereby an absorbing of the sunlight energy is carried out with the aid of the solar collector.

Solar radiation is converted into thermal energy of a heat transfer fluid which is located in the core tube. The heat transfer fluid is a thermo-oil or a molten salt. Via a heat exchanger thermal energy of the heat transfer fluid is used to produce steam. This steam drives a turbine which is connected to a generator. The generator produces current.

One specific advantage of the invention has to be noted: With the aid of the invention it is possible to maintain proper thermal characteristics of the heat receiver tube. It is not necessary to exchange the heat receiver tube after a couple of years of operation.

### BRIEF DESCRIPTION OF THE DRAWINGS

Further features and advantages of the invention are produced from the description of an exemplary embodiment with reference to the drawings. The drawings are schematic.
Figure 1 shows cross sections of a heat receiver tube.
Figure 2 shows a cross section perpendicular to figure 1.
Figure 3 shows a part of the heat receiver tube of figure 1.
Figure 4 shows a part of a heat receiver tube not part of the present invention.
Figure 5 shows a cross section of a parabolic through collector with the heat receiver tube.

### DETAILED DESCRIPTION OF THE INVENTION

Given is a heat receiver tube 1. The heat receiver tube 1 comprises a core tube 11 stainless steel. The core tube 11 comprises a core tube surface 112 with at least one solar energy absorptive coating for absorbing solar radiation 2 of the sunlight

In the core tube 11 a heat transfer fluid 111 can be located. The heat transfer fluid 111 is a thermo-oil. Alternatively, the heat transfer fluid 111 is molten salt.

The enveloping tube 10 comprises an enveloping tube wall 101 out of glass. This enveloping tube wall is transparent for the solar radiation 2. The enveloping tube wall 101 comprises an inner enveloping tube surface 102, the external surface is coated by an AR layer (anti reflecting coating).

The core tube 11 and the enveloping tube 10 are coaxially arranged to each other. The core tube surface 112 and the inner enveloping tube surface 102 arranged face to face. By this an inner heat receiver tube space 12 results which is bordered by the core tube surface 112 and the inner enveloping tube surface 102.

The core tube 11 and the enveloping tube 10 are coaxially arranged to each other such that an inner heat receiver tube space 3 is formed which is bordered by the core tube surface 112 and the inner enveloping tube surface 102. At a front side 13 of the heat receiver tube 1 a dimension adapting device 6 with a flexible adapting device wall 60 for compensation of a thermally induced change of at least one dimension 12 of the heat receiver tube 1 is arranged. The dimension adapting device 6 is a bellows 61 with bellows walls 611.

The heat receiver tube 1 comprises at least one inlet port for pouring in of at least one inert gas into the inner heat receiver tube space. The inert gas is Xenon. In an alternative embodiment, the inert gas is Krypton. A partial pressure of the inert gas comprises 150 mbar.

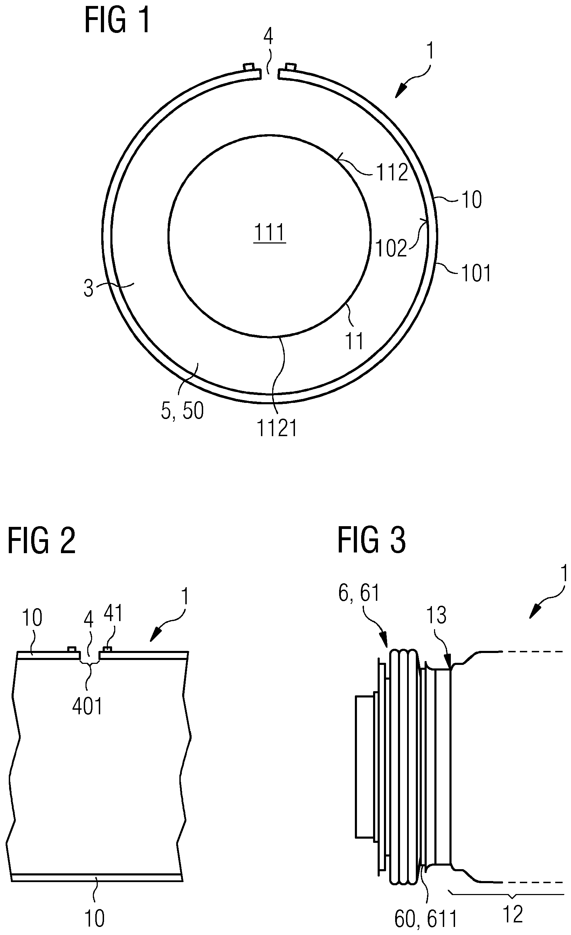

First embodiment: The inlet port 4 is drilled into the glass tube wall 101 of the envelope tube 10 (figures 1 and 2). The inlet port dimension 401 of the inlet port 4 is about 10 mm.

Second embodiment: the inlet port 4 is drilled into the bellows wall 611 of a bellows 61.

Third embodiment: The inlet port 4 is drilled into a heat receiver tube skirt 103 which covers (partly) the bellows 60 and the enveloping glass tube 10.

After the filling (pouring in) of the inert gas 5 through the inlet port 4 a sealing of the inlet port 4 is carried out with the aid of a sealing 41. The sealing 41 is an O-ring with elastomeric sealing material.

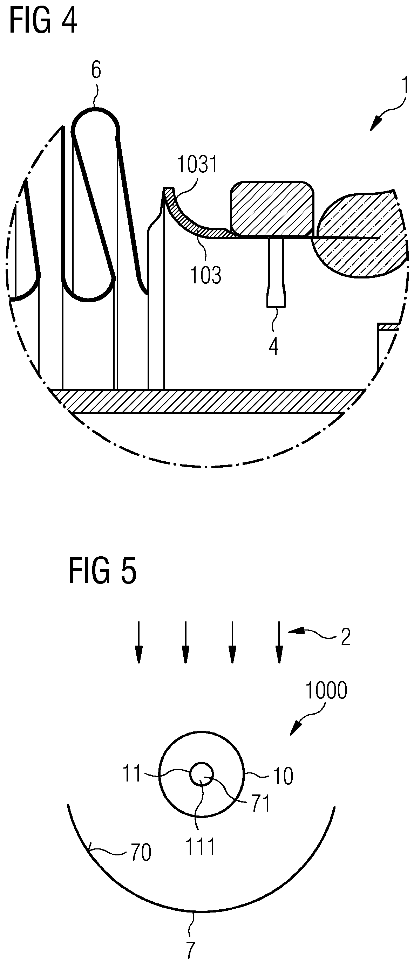

The heat receiver tube 1 is part of a solar collector 1000. The solar collector 1000 comprises at least one parabolic mirror with a sunlight reflective surface. By the solar radiation reflecting surface 70 sunlight 2 is directed to the focal line 71 of the parabolic mirror 7. The concentrated sunlight is absorbed by the heat receiver tube 1 (figure 5).

The heat receiver tube 1 is arranged on the side of the incoming direct sunlight radiation 2.

The solar collector 1000 is used in a solar thermal power plant for converting solar energy into electrical energy. The heated heat transfer fluid is used to produce steam via a heat exchanger. The steam is driving a turbine, which is connected to a generator. The generator produces current (electrical energy).

## Claims

1. Method for manufacturing a heat receiver tube (1) for absorbing solar energy and for transferring absorbed solar energy to a heat transfer fluid (111) which can be located inside of at least one core tube (11) of the heat receiver tube (1), wherein
- the core tube (11) comprises a core tube surface (112) with at least one solar energy absorptive coating (1121) for absorbing solar radiation (2);
- the core tube (11) is enveloped by at least one enveloping tube (10);
- the enveloping tube (10) comprises at least one enveloping tube wall (101) which is at least partly transparent for the solar radiation (2);
- the enveloping tube wall (101) comprises at least one inner enveloping tube surface (102);
- the core tube (11) and the enveloping tube (10) are coaxially arranged to each other such that an inner heat receiver tube space (3) is formed which is bordered by the core tube surface (112) and the inner enveloping tube surface (102); and
- the heat receiver tube (1) comprises at least one inlet port (4) for pouring in of at least one inert gas (5) into the inner heat receiver tube space (3);
wherein the method comprises following steps:
a) Providing of at least one precursor tube of the heat receiver tube (1);
b) Arranging of the inlet port (4) at the precursor tube of the heat receiver tube; and
c) Pouring in of the inert gas (5) into the inner heat receiver tube space (3) through the inlet port (4);
whereby
- an inert gas (5) is used which is at least one noble gas (50) which is selected from the group consisting of Krypton and Xenon; and
- a partial pressure of the inert gas (5) in the inner heat receiver tube space (3) results which is selected from the range between 5 mbar and 300 mbar;
**characterized in that**
- the arranging of the inlet port (4) comprises a drilling of a hole into the enveloping tube wall; and
- the drilling comprises a laser drilling.

2. Method according to claim 1, wherein an inlet port (4) is used which comprises an inlet port dimension (401) which is selected from the range between 1 mm and 20 mm and preferably selected from the range between 2 mm and 10 mm.

3. Method according to claim 1 or 2, wherein the partial pressure of the inert gas (5) in the inner heat receiver tube space (3) is selected from the range between 100 mbar and 200 mbar.

4. Method according to one of the claims 1 to 3, wherein an enveloping tube (10) with an enveloping tube wall (101) is used which comprises glass.

5. Method according to one of the claims 1 to 4, wherein a heat receiver tube (1) is used which comprises at least one dimension adapting device (6) with a flexible adapting device wall (60) for compensation of a thermally induced change of at least one dimension of the heat receiver tube (1).

6. Method according to claim 5, wherein a dimension adapting device (6) is used which comprises a bellows (61) and wherein the flexible adapting device wall (60) comprises a bellows wall (611) of the bellows (61).

7. Method according to claim 6, wherein a bellows (61) is used which is arranged at a front side (13) of the heat receiver tube (1).

8. Method according to one of the claims 5 to 7, wherein a dimension adapting device with a flexible adapting device wall (61) is used which comprise at least one metal.

9. Method according to one of the claims 1 to 8, wherein after the pouring of the inert gas though the inlet port (4) a sealing of the inlet port (4) with the aid of a sealing (41) is carried out.

10. Solar collector (1000) comprising
- at least one mirror (7) having a solar radiation (2) reflecting mirror surface (70) for directing the solar radiation (2) to a focal line (71) of the solar radiation reflecting mirror surface (70); and
- at least one heat receiver tube (1) manufactured according to one of the claims 1 to 9 wherein the manufactured heat receiver tube is arranged in the focal line (71) of the solar radiation reflecting mirror surface (70).

11. Solar collector according to claim 10, wherein the mirror (7) is a parabolic mirror or a Fresnel mirror.

12. Method for producing electricity by using the solar collector according to claim 10 or 11 in a solar thermal power plant for converting solar radiation into electrical energy, wherein an absorbing of the solar radiation is carried out with the aid of the solar collector.

## Patentansprüche

1. Verfahren zum Herstellen eines Wärmeaufnahmerohrs (1) zum Absorbieren von Solarenergie und zum Übertragen der absorbierten Solarenergie auf ein Wärmeübertragungsfluid (111), das sich in mindestens einem Kernrohr (11) des Wärmeaufnahmerohrs (1) befinden kann, wobei
- das Kernrohr (11) eine Kernrohrfläche (112) mit mindestens einer Solarenergie absorbierenden Beschichtung (1121) zum Absorbieren von Solarenergie (2) umfasst,
- das Kernrohr (11) mit mindestens einem Mantelrohr (10) ummantelt ist,
- das Mantelrohr (10) mindestens eine Mantelrohrwand (101) umfasst, die zumindest teilweise für die Solarstrahlung (2) durchlässig ist,
- die Mantelrohrwand (101) mindestens eine Mantelrohrinnenfläche (102) umfasst,
- das Kernrohr (11) und das Mantelrohr (10) koaxial zueinander angeordnet sind, so dass ein Wärmeaufnahmerohrinnenraum (3) gebildet wird, der von der Kernrohrfläche (112) und der Mantelrohrinnenfläche (102) begrenzt ist, und
- das Wärmeaufnahmerohr (1) mindestens eine Einlassöffnung (4) zum Einleiten mindestens eines Inertgases (5) in den Wärmeaufnahmerohrinnenraum (3) umfasst,
wobei das Verfahren folgende Schritte umfasst:
a) Bereitstellen mindestens eines Vorläuferrohrs des Wärmeaufnahmerohrs (1),
b) Anordnen der Einlassöffnung (4) an dem Vorläuferrohr des Wärmeaufnahmerohrs und
c) Einleiten des Inertgases (5) in den
Wärmeaufnahmerohrinnenraum (3) durch die Einlassöffnung (4), wobei
- ein Inertgas (5) verwendet wird, bei dem es sich um mindestens ein Edelgas (50) handelt, das aus der Gruppe ausgewählt ist, die aus Krypton und Xenon besteht, und
- sich ein Partialdruck des Inertgases (5) in dem Wärmeaufnahmerohrinnenraum (3) ergibt, der aus dem Bereich zwischen 5 mbar und 300 mbar ausgewählt ist,
**dadurch gekennzeichnet, dass**
- das Anordnen der Einlassöffnung (4) das Bohren eines Lochs in die Mantelrohrwand umfasst und
- das Bohren Laserbohren umfasst.

2. Verfahren nach Anspruch 1, wobei eine Einlassöffnung (4) verwendet wird, die eine Einlassöffnungsabmessung (401) aufweist, die aus dem Bereich zwischen 1 mm und 20 mm und vorzugsweise aus dem Bereich zwischen 2 mm und 10 mm ausgewählt ist.

3. Verfahren nach Anspruch 1 oder 2, wobei der Partialdruck des Inertgases (5) in dem Wärmeaufnahmerohrinnenraum (3) aus dem Bereich zwischen 100 mbar und 200 mbar ausgewählt ist.

4. Verfahren nach einem der Ansprüche 1 bis 3, wobei ein Mantelrohr (10) mit einer Mantelrohrwand (101) verwendet wird, die Glas umfasst.

5. Verfahren nach einem der Ansprüche 1 bis 4, wobei ein Wärmeaufnahmerohr (1) verwendet wird, das mindestens eine Abmessungsanpassvorrichtung (6) mit einer flexiblen Anpassvorrichtungswand (60) zum Kompensieren einer thermisch verursachten Änderung mindestens einer Abmessung des Wärmeaufnahmerohrs (1) umfasst.

6. Verfahren nach Anspruch 5, wobei eine Abmessungsanpassvorrichtung (6) verwendet wird, die einen Balg (61) umfasst, und die flexible Anpassvorrichtungswand (60) eine Balgwand (611) des Balgs (61) umfasst.

7. Verfahren nach Anspruch 6, wobei ein Balg (61) verwendet wird, der an einer Vorderseite (13) des Wärmeaufnahmerohrs (1) angeordnet ist.

8. Verfahren nach einem der Ansprüche 5 bis 7, wobei eine Abmessungsanpassvorrichtung mit einer flexiblen Anpassvorrichtungswand (61) verwendet wird, die mindestens ein Metall umfasst.

9. Verfahren nach einem der Ansprüche 1 bis 8, wobei nach dem Einleiten des Inertgases über die Einlassöffnung (4) ein Abdichten der Einlassöffnung (4) mithilfe einer Dichtung (41) erfolgt.

10. Solarkollektor (1000), der Folgendes umfasst:
- mindestens einen Spiegel (7) mit einer Solarstrahlung (2) reflektierenden Spiegelfläche (70) zum Richten von Solarstrahlung (2) auf eine Brennlinie (71) der Solarstrahlung (2) reflektierenden Spiegelfläche (70) und
- mindestens ein nach einem der Ansprüche 1 bis 9 hergestelltes Wärmeaufnahmerohr (1), das auf der Brennlinie (71) der Solarstrahlung reflektierenden Spiegelfläche (70) angeordnet ist.

11. Solarkollektor nach Anspruch 10, wobei es sich bei dem Spiegel (7) um einen Parabolspiegel oder einen Fresnel-Spiegel handelt.

12. Verfahren zum Erzeugen von Strom durch Verwenden des Solarkollektors nach Anspruch 10 oder 11 in einem solarthermischen Kraftwerk zum Umwandeln von Solarstrahlung in elektrische Energie, wobei mit Hilfe des Solarkollektors ein Absorbieren der Solarstrahlung erfolgt.

## Revendications

1. Procédé de fabrication d'un tube récepteur de chaleur (1) pour absorber l'énergie solaire et pour transférer l'énergie solaire absorbée à un fluide de transfert de chaleur (111) qui peut être situé à l'intérieur d'au moins un tube central (11) du tube récepteur de chaleur (1), dans lequel
- le tube central (11) comprend une surface de tube central (112) avec au moins un revêtement absorbant l'énergie solaire (1121) pour absorber le rayonnement solaire (2) ;
- le tube central (11) est enveloppé par au moins un tube enveloppant (10) ;
- le tube enveloppant (10) comprend au moins une paroi de tube enveloppant (101) qui est au moins partiellement transparente pour le rayonnement solaire (2) ;
- la paroi de tube enveloppant (101) comprend au moins une surface intérieure de tube enveloppant (102) ;
- le tube central (11) et le tube enveloppant (10) sont disposés coaxialement l'un à l'autre de sorte qu'un espace intérieur de tube récepteur de chaleur (3) est formé, bordé par la surface de tube central (112) et la surface intérieure de tube enveloppant (102) ; et
- le tube récepteur de chaleur (1) comprend au moins un orifice d'entrée (4) pour verser au moins un gaz inerte (5) dans l'espace intérieur de tube récepteur de chaleur (3) ;
dans lequel le procédé comprend les étapes suivantes :
a) la fourniture d'au moins un tube précurseur du tube récepteur de chaleur (1) ;
b) la disposition de l'orifice d'entrée (4) au niveau du tube précurseur du tube récepteur de chaleur ; et
c) le versement du gaz inerte (5) dans l'espace intérieur de tube récepteur de chaleur (3) à travers l'orifice d'entrée (4) ;
moyennant quoi
- on utilise un gaz inerte (5) qui est au moins un gaz noble (50) qui est choisi dans le groupe constitué de Krypton et Xénon ; et
- il en résulte une pression partielle du gaz inerte (5) dans l'espace intérieur de tube récepteur de chaleur (3) qui est sélectionnée dans la plage comprise entre 5 mbar et 300 mbar ;
**caractérisé en ce que**
- la disposition de l'orifice d'entrée (4) comprend un perçage d'un trou dans la paroi de tube enveloppant ; et
- le perçage comprend un perçage par laser.

2. Procédé selon la revendication 1, dans lequel on utilise un orifice d'entrée (4) qui comprend une dimension d'orifice d'entrée (401) qui est sélectionnée dans la plage comprise entre 1 mm et 20 mm et de préférence sélectionnée dans la plage comprise entre 2 mm et 10 mm.

3. Procédé selon la revendication 1 ou 2, dans lequel la pression partielle du gaz inerte (5) dans l'espace intérieur de tube récepteur de chaleur (3) est sélectionnée dans la plage comprise entre 100 mbar et 200 mbar.

4. Procédé selon l'une des revendications 1 à 3, dans lequel on utilise un tube enveloppant (10) doté d'une paroi de tube enveloppant (101) qui comprend du verre.

5. Procédé selon l'une des revendications 1 à 4, dans lequel on utilise un tube récepteur de chaleur (1) qui comprend au moins un dispositif d'adaptation de dimension (6) doté d'une paroi de dispositif d'adaptation flexible (60) pour compenser une variation induite thermiquement d'au moins une dimension du tube récepteur de chaleur (1).

6. Procédé selon la revendication 5, dans lequel on utilise un dispositif d'adaptation de dimension (6) qui comprend un soufflet (61) et dans lequel la paroi de dispositif d'adaptation flexible (60) comprend une paroi de soufflet (611) du soufflet (61).

7. Procédé selon la revendication 6, dans lequel on utilise un soufflet (61) qui est disposé sur un côté avant (13) du tube récepteur de chaleur (1).

8. Procédé selon l'une des revendications 5 à 7, dans lequel on utilise un dispositif d'adaptation de dimension doté d'une paroi de dispositif d'adaptation flexible (61) qui comprend au moins un métal.

9. Procédé selon l'une des revendications 1 à 8, dans lequel après le versement du gaz inerte à travers l'orifice d'entrée (4), l'orifice d'entrée (4) est étanchéifié à l'aide d'un scellement (41).

10. Capteur solaire (1000) comprenant
- au moins un miroir (7) ayant une surface de miroir (70) réfléchissant le rayonnement solaire (2) pour diriger le rayonnement solaire (2) vers une ligne focale (71) de la surface de miroir (70) réfléchissant le rayonnement solaire ; et
- au moins un tube récepteur de chaleur (1) fabriqué selon l'une des revendications 1 à 9, dans lequel le tube récepteur de chaleur fabriqué est disposé dans la ligne focale (71) de la surface de miroir réfléchissant le rayonnement solaire (70).

11. Capteur solaire selon la revendication 10, dans lequel le miroir (7) est un miroir parabolique ou un miroir de Fresnel.

12. Procédé de production d'électricité en utilisant le capteur solaire selon la revendication 10 ou 11 dans une centrale solaire thermique pour convertir le rayonnement solaire en énergie électrique, dans lequel le rayonnement solaire est absorbée à l'aide du capteur solaire.
